# EUROPÄISCHE PATENTSCHRIFT

(11) **EP 0 909 741 B1**
(45) Veröffentlichungstag und Bekanntmachung des Hinweises auf die Patenterteilung: **07.05.2003**
(21) Anmeldenummer: 98117097.0
(22) Anmeldetag: 10.09.1998
(51) Int. Cl.: C03B 9/40, C03B 9/41, C03B 9/16, C03B 9/193, C03B 9/38

(54) **Stellvorrichtung für einen Plunger einer Vor- oder Fertigform einer Glasmaschine**
Device for controlling the plunger of a blank or blow mould of a glassmachine
Appareil de réglage du piston plongueur d'un moule ébaucheur ou finisseur d'une machine de fabrication de verre

(30) Priorität: 17.10.1997 DE 19746058
(43) Veröffentlichungstag der Anmeldung: 21.04.1999
(73) Patentinhaber: GPS GLASPRODUKTIONS-SERVICE GMBH, 45329 Essen (DE)
(72) Erfinder: Emrath, Norbert, 45721 Haltern (DE); Ertner, Helmut, 47669 Wachtendonk (DE)
(74) Vertreter: Lelgemann, Karl-Heinz, Dipl.-Ing.

(56) Entgegenhaltungen:
- EP-A- 0 488 136
- DE-A- 3 025 333
- US-A- 3 607 206
- US-A- 5 139 559

## Beschreibung

Die Erfindung bezieht sich auf eine Stellvorrichtung für einen Plunger einer Vor- oder Fertigform einer Glasmaschine nach dem Oberbegriff des Patentanspruchs 1.

Im Zuge der bei der Herstellung von Glasartikeln in den letzten Jahren kontinuierlich gesteigerten Produktionsgeschwindigkeiten und Qualitätsanforderungen hat es sich als notwendig erwiesen, die Hubbewegung der Kolbenstange und damit die Auf- und Abwärtsbewegung des umittelbar auf den zur Ausbildung des Glasartikels herangezogenen Glastropfen einwirkenden Plungers genau zu regeln, da nur durch einen exakt vorgegebenen Ablauf der Plungerbewegung bei den üblichen Produktionsgeschwindigkeiten die gestellten Qualitätsansprüche erfüllt werden können.

Aus der US-A-5 139 559 ist eine Stellvorrichtung mit einer in einem Zylinder bewegbaren Kolbenstange bekannt, wobei an einem Ende der Kolbenstange der Plunger angeordnet ist. Des weiteren hat diese Stellvorrichtung ein Kühlrohr, das in Radialrichtung innerhalb der Kolbenstange angeordnet ist, längs dem die Kolbenstange im Zylinder über einen vorgebbaren Hubweg bewegbar ist und an dem ein Wegsensor vorgesehen ist.

Der am Kühlrohr vorgesehene Wegsensor erstreckt sich bei der aus der US-A-5 139 559 bekannten Stellvorrichtung etwa über den oberen Endabschnitt des Kühlrohrs und wird durch eine Spulenfeder gebildet. Dieser vom bzw. am Kühlrohr ausgebildete bzw. vorgesehene Sensor dient dazu, während des durch den Plunger vorgenommenen Preßvorgangs die Linearbewegung der den Plunger tragenden Kolbenstange zu erfassen. Hierzu ist im zylindrischen Innenraum der Kolbenstange ein weiteres zylindrisches Element, nämlich ein röhrenförmiges Teil, vorgesehen, welches durch seinen oberen Endabschnitt innerhalb der Kolbenstange fixiert ist. Der Durchmesser des röhrenförmigen Teils ist so gewählt, daß zwischen dem Außenumfang des röhrenförmigen Teils und dem Innenumfang der Kolbenstange ein Spalt ausgebildet ist, in den das Kühlrohr eindringt, wenn die Kolbenstange und das sich mit ihr bewegende röhrenförmige Teil in Linearrichtung in Bezug auf das Kühlrohr auf- und abwärts wandern. Mittels des in Radialrichtung innerhalb der Kolbenstange angeordneten röhrenförmigen Teils, das aus einem nicht magnetisierbaren Werkstoff ausgebildet ist, erfolgt durch dessen Zusammenwirken mit der Spulenfeder die Positionsbestimmung der Kolbenstange bzw. des Plungers bei der Verformung des Glases durch den Plunger. Innerhalb des die Kolbenstange in deren oberer Position umgebenden Zylindergehäuses sind weitere zur Positionsbestimmung der Kolbenstange dienende Bauteile vorgesehen.

Ausgehend von dem vorstehend geschilderten Stand der Technik liegt der Erfindung die Aufgabe zugrunde, eine Stellvorrichtung für einen Plunger einer Vor- oder Fertigform einer Glasmaschine zu schaffen, die einerseits eine genauere Regelung der Plungerbewegung ermöglicht und die andererseits eine erhebliche Reduzierung der für die Positionsbestimmung des Plungers erforderlichen Bauteile zuläßt.

Diese Aufgabe wird erfindungsgemäß durch die Merkmale im Kennzeichen des Patentanspruchs 1 gelöst. Durch die Ausgestaltung des Wegsensors innerhalb der Kühlrohrwandung entlang des insgesamt möglichen Hubbereichs der Kolbenstange ist es möglich, die Position der Kolbenstange über deren gesamten Hubweg, d.h. auch außerhalb der Hublänge, während der die Glasverformung bewirkt wird, zu erfassen, mit der Folge, daß die im Falle der Stellvorrichtung gemäß der US-A-5 139 559 im oberen Zylinder vorgesehenen weiteren Positionsmeßeinrichtungen überflüssig werden. Durch die erfindungsgemäße Ausgestaltung der Kolbenstange aus einem nicht magnetisierbaren Werkstoff wird die Ausgestaltung der Positionsmeßeinrichtung insoweit erheblich vereinfacht, als neben der ohnehin für den Betrieb des Plungers erforderlichen Kolbenstange keine weiteren Bauteile, z.B. kein im zylindrischen Innenraum der Kolbenstange koaxial angeordnetes röhrenförmiges Bauteil, mehr notwendig sind. Im Falle der erfindungsgemäßen Stellvorrichtung ist somit mit einem weitaus geringeren technischkonstruktiven Aufwand die jeweilige Position der Kolbenstange und damit des Plungers genauer als bei der Stellvorrichtung gemäß der US-A-5 139 559 erfaßbar, zumal im Falle der erfindungsgemäßen Stellvorrichtung lediglich eine Art und Weise der Positionsermittlung durchgeführt wird.

Die sich längs des Kühlrohrs und damit längs des Wegsensors bewegende Kolbenstange beeinflußt den Wegsensor derart, daß mittels des Wegsensors die jeweilige Position der Kolbenstange erfaßbar ist. Hierdurch kann die tatsächliche Position der Kolbenstange in bezug auf das Kühlrohr bzw. den Langwegsensor für die Regelung der Bewegung der Kolbenstange und damit des Plungers berücksichtigt werden. Etwaige Abweichungen der tatsächlichen Position der Kolbenstange von der gemäß der geplanten Plungerbewegung vorgesehenen Position der Kolbenstange können zu Regelungseingriffen hinsichtlich der Plungerbewegung führen mit dem Ziel, die tatsächliche Plungerbewegung der planmäßigen Plungerbewegung möglichst kurzfristig anzugleichen. Das zum Einsatz kommende Meßverfahren arbeitet berührungsfrei, so daß weder der Wegsensor noch die Kolbenstange aufgrund des eingesetzten Meßverfahrens einem mechanischen Verschleiß unterliegen.

Zweckmäßigerweise ist die Kolbenstange gemäß Patentanspruch 2 ausgebildet; dieser Werkstoff genügt in hervorragender Weise nicht nur dem durchzuführenden Meßverfahren, sondern auch den mechanischen und thermischen Beanspruchungen, die mit dem Betrieb der Stellvorrichtung einhergehen.

Darüber hinaus hat die Ausgestaltung gemäß Patentanspruch 3 sich als vorteilhaft erwiesen, wobei dann in wenig aufwendiger Weise das Kühlrohr zur Führung der Kolbenstange während der Hubbewegung derselben herangezogen werden kann.

Gemäß Patentanspruch 4 sind pneumatische Zylinder-Kolben-Einheiten als Betätigungsglied für die bereits beschriebenen Stellvorrichtungen vorteilhaft zum Einsatz bringbar.

Gemäß Patentanspruch 5 werden bei der Längsbewegung der Kolbenstange in bezug auf das Kühlrohr und damit in bezug auf die Spule Wirbelströme in die nicht magnetisierbare Kolbenstange induziert, wodurch der Spule des Wegsensors Energie entzogen wird. Dieser Energieentzug kann zur Ermittlung der tatsächlichen Position der Kolbenstange in bezug auf den Wegsensor herangezogen werden, wodurch sich eine exakte Erfassung der tatsächlichen Position des Plungers ergibt.

Gemäß Patentanspruch 6 kann die tatsächliche Position der Kolbenstange mit geringem Aufwand in das lineare elektrische Ausgangssignal der Elektronikeinheit umgewandelt werden.

Vorteilhafterweise ist die Elektronikeinheit gemäß Patentanspruch 7 als Hybridelektronik ausgebildet.

Im folgenden wird die Erfindung an Hand einer Ausführungsform unter Bezugnahme auf die Zeichnung näher erläutert.

Es zeigen:
- Figur 1: eine teilweise geschnittene Darstellung einer Anordnung mit zwei erfindungsgemäßen Stellvorrichtungen; und

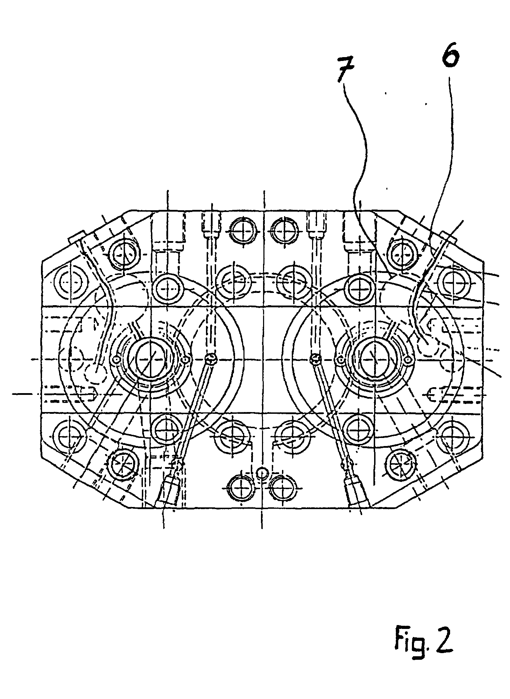

- Figur 2: eine Unteransicht der in Figur 1 dargestellten Anordnung.

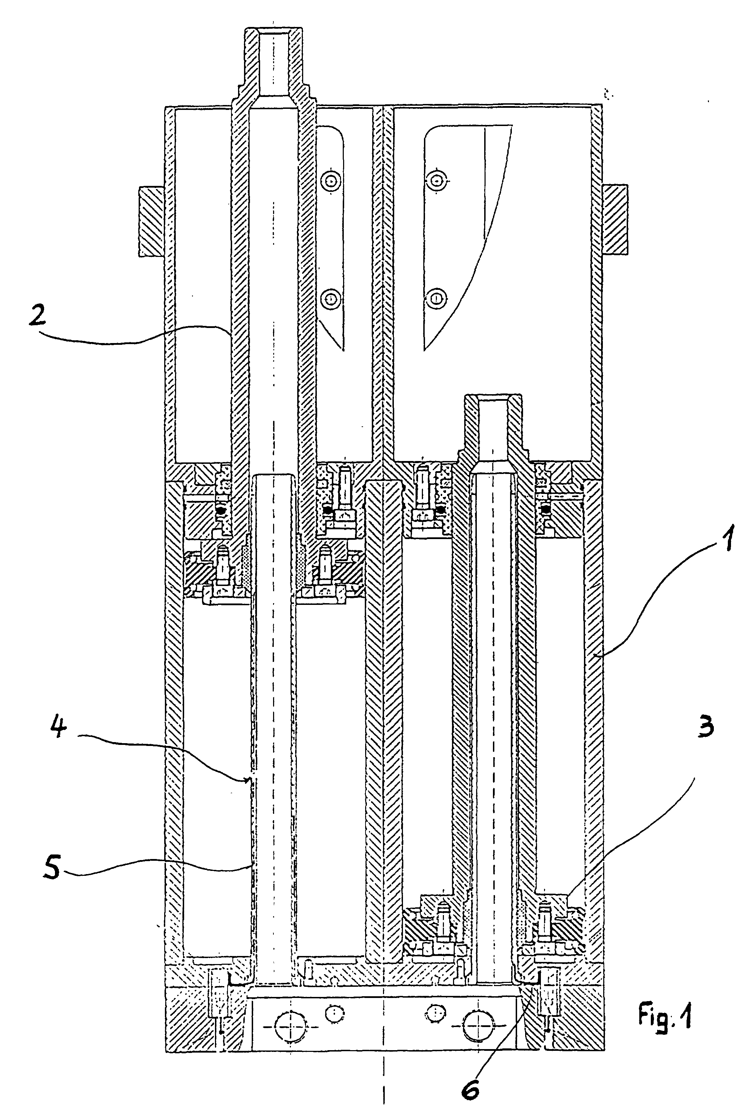

Bei der in Figur 1 im Schnitt dargestellten Anordnung sind zwei Zylinder-Kolben-Einheiten vorgesehen, von denen jede einen Zylinder 1 und eine Kolbenstange 2 aufweist. In der in Figur 1 linken Zylinder-Kolben-Einheit befindet sich die Kolbenstange in ihrer höchsten, bei der in Figur 1 rechten Zylinder-Kolben-Einheit befindet sich die Kolbenstange 2 in ihrer niedrigsten Position.

Am freien Ende der Kolbenstange 2, d.h. an ihrem in Figur 1 oberen Ende, ist in nicht dargestellter Weise ein Plunger angebracht, welcher zur Ausformung eines ebenfalls nicht dargestellten Glasartikels dient.

Die Kolbenstange 2 ist hohlzylindrisch ausgebildet. Sie weist einen Kolben 3 auf, der auf der Innenwandung des Zylinders 1 geführt ist. Durch Druckluftbeaufschlagung der einen oder der anderen Seite des Kolbens 3 wird die Bewegung der Kolbenstange 2 in der einen oder der anderen Richtung bewirkt.

In Radialrichtung mittig ist im Zylinder 1 ein Kühlrohr 4 angeordnet, welches hinsichtlich seines Außendurchmessers etwa dem Innendurchmesser der hohlzylindrischen Kolbenstange entspricht und welches in der in Figur 1 rechts dargestellten Position der Kolbenstange insgesamt innerhalb der Kolbenstange 2 angeordnet ist. Das Kühlrohr 4 ist mit Kühlluft beaufschlagbar, die in der in Figur 1 rechts dargestellten oberen Position der Kolbenstange 2 durch das Kühlrohr 4 und die Kolbenstange 2 zum Plunger bzw. zu dem vom Plunger gerade ausgebildeten Glasartikel transportiert wird, um letzteren zu kühlen.

Im Material des ebenfalls hohlzylindrisch ausgebildeten Kühlrohrs 4 ist ein Langwegsensor 5 ausgebildet, der lediglich im linken Teil der Figur 1 dargestellt ist. Der Wegsensor 5 erstreckt sich über den gesamten Hubbereich der Kolbenstange 2 und hat eine Spule, an die über ein Kabel 6 eine Spannung anlegbar ist.

Darüber hinaus weist der Langwegsensor 5 eine als Hybridelektronik 7 ausgebildete Elektronikeinheit auf.

Wenn die Kolbenstange 2 längs dem Kühlrohr 4 und damit längs der Spule des Langwegsensors 5 bewegt wird, wird der Spule durch Induktion von Wirbelströmen in die nicht magnetisierbare Kolbenstange 2 Energie entzogen. Der Energieentzug ist proportional zur Überlagerung des Wegsensors 5 bzw. der Spule durch die Kolbenstange 2, d.h. der Energieentzug an der Spule des Wegsenors 5 entspricht der Position der Kolbenstange in bezug auf das Kühlrohr 4 bzw. in bezug auf den Langwegsensor 5.

Dieser Energieentzug wird in geeigneter Weise durch die Hybridelektronik 7 erfaßt und in ein lineares elektrisches Ausgangssignal von beispielsweise 4 bis 20 mA umgewandelt.

Zur Speisung der Spule des Wegsensors 5 dient z.B. eine DC-Spannung zwischen 18 und 30 Volt.

Aufgrund des Ausgangssignals der Hybridelektronik 7 ist die tatsächliche Position der Kolbenstange 2 in bezug auf das Kühlrohr 4 meßbar. Sofern die tatsächlich gemessene Position der Kolbenstange von einer für eine Plungerbewegung vorgegebenen Position abweicht, kann in die Bewegungsregelung der Plungerbewegung eingegriffen werden, mit dem Ziel, die tatsächliche Kolbenstangen- und damit Plungerstellung wieder an die gemäß der beabsichtigten Plungerbewegung vorgegebene Kolbenstangen- bzw. Plungerstellung anzupassen.

Im Falle der erfindungsgemäßen Stellvorrichtung werden u.a. ohnehin zur Ausgestaltung der Stellvorrichtung erforderliche Bauteile derart ausgeführt, daß sie Bestandteile der zur Ermittlung der tatsächlichen Position der Kolbenstange 2 erforderlichen Meßvorrichtung bilden.

## Patentansprüche

1. Stellvorrichtung für einen Plunger einer Vor- oder Fertigform einer Glasmaschine, mit einer in einem Zylinder (1) bewegbaren Kolbenstange (2), an deren einem Ende der Plunger angeordnet ist, und einem Kühlrohr (4), das innerhalb der Kolbenstange (2) angeordnet ist, längs dem die Kolbenstange (2) im Zylinder (1) über einen vorgebbaren Hubweg bewegbar ist und an dem ein Wegsensor vorgesehen ist, **dadurch gekennzeichnet, daß** sich der Wegsensor innerhalb der Kühlrohrwandung entlang des insgesamt möglichen Hubbereichs der Kolbenstange (2) erstreckt, und daß die Kolbenstange (2) aus einem nicht magnetisierbaren Werkstoff ausgebildet ist.

2. Stellvorrichtung nach Anspruch 1, deren Kolbenstange (2) aus einem nicht magnetisierbaren Stahl ausgebildet ist.

3. Stellvorrichtung nach Anspruch 1 oder 2, deren Kolbenstange (2) koaxial zum Kühlrohr (4) angeordnet ist.

4. Stellvorrichtung nach einem der Ansprüche 1 bis 3, deren Zylinder (1) und Kolbenstange (2) als pneumatische Zylinder-Kolben-Einheit ausgebildet sind.

5. Stellvorrichtung nach einem der Ansprüche 1 bis 4, deren Wegsensor (5) eine Spule aufweist, die mit elektrischer Energie beaufschlagbar ist und sich zumindest längs des Hubwegs der Kolbenstange (2) erstreckt.

6. Stellvorrichtung nach Anspruch 5, deren Wegsensor (5) eine Elektronikeinheit (7) aufweist, in der ein der Stellung der Kolbenstange (2) in Bezug auf das Kühlrohr (4) entsprechendes Ausgangssignal erzeugbar ist.

7. Stellvorrichtung nach Anspruch 6, bei der die Elektronikeinheit als Hybridelektronik (7) ausgebildet ist.

## Claims

1. Control device for a plunger of a blank mould or a finishing mould of a glass-forming machine, having a piston rod (2) which is movable in a cylinder (1) and at one end of which the plunger is arranged, and having a cooling tube (4) which is arranged inside the piston rod (2) and along which the piston rod (2) is movable in the cylinder (1) over a predeterminable stroke distance and on which a displacement sensor is provided, **characterised in that** the displacement sensor extends inside the cooling tube wall along the total possible stroke range of the piston rod (2), and **in that** the piston rod (2) is constructed from a non-magnetisable material.

2. Control device according to claim 1, the piston rod (2) of which is constructed from a non-magnetisable steel.

3. Control device according to claim 1 or 2, the piston rod (2) of which is arranged co-axially with the cooling tube (4).

4. Control device according to any one of claims 1 to 3, the cylinder (1) and piston rod (2) of which are in the form of a pneumatic cylinder-piston unit.

5. Control device according to any one of claims 1 to 4, the displacement sensor (5) of which has a coil which can be acted upon with electrical energy and which extends at least along the stroke path of the piston rod (2).

6. Control device according to claim 5, the displacement sensor (5) of which has an electronic unit (7) in which an output signal corresponding to the position of the piston rod (2) relative to the cooling tube (4) can be generated.

7. Control device according to claim 6, wherein the electronic unit is in the form of a hybrid electronic device (7).

## Revendications

1. Dispositif de positionnement pour un piston d'un moule d'ébauchage ou de finition d'une machine de verrerie, avec une tige de piston (2) qui se déplace à l'intérieur d'un cylindre (1) et à l'une des extrémités de laquelle le piston est disposé, et avec un tube de refroidissement (4), qui est disposé à l'intérieur de la tige de piston (2), le long duquel la tige de piston (2) peut être déplacée dans le cylindre (1) sur une course prédéterminée et sur lequel est placé un capteur de course, **caractérisé en ce que** le capteur de course, à l'intérieur du tube de refroidissement, s'étend le long de la zone de déplacement possible de la tige de piston (2), et **en ce que** la tige de piston (2) est réalisée en un matériau non magnétisable.

2. Dispositif de positionnement selon la revendication 1, dans lequel la tige de piston (2) est réalisée en acier non magnétisable.

3. Dispositif de positionnement selon la revendication 1 ou 2, dans lequel la tige de piston (2) est disposée coaxialement avec le tube de refroidissement (4).

4. Dispositif de positionnement selon une des revendications 1 à 3, dans lequel le cylindre (1) et la tige de piston (2) sont conformés en ensemble piston-cylindre.

5. Dispositif de positionnement selon une des revendications 1 à 4, dans lequel le capteur de course (5) comprend une bobine qui peut être alimentée en énergie électrique et s'étend au moins le long de la course de la tige de piston (2).

6. Dispositif de positionnement selon la revendication 5, dans lequel le capteur de course (5) comporte une unité électronique (7) dans laquelle un signal de sortie correspondant à la position de la tige de piston (2) par rapport au tube de refroidissement (4) peut être produit.

7. Dispositif de positionnement selon la revendication 6, dans lequel l'unité électronique est réalisée sous forme d'électronique hybride (7).
